# EUROPEAN PATENT SPECIFICATION

(11) **EP 4 539 067 B1**
(45) Date of publication and mention of the grant of the patent: **09.12.2026**
(21) Application number: 24203513.7
(22) Date of filing: 30.09.2024
(51) Int. Cl.: H01G 4/14, H01G 4/30, H01G 4/224, H01G 4/232, H01G 9/08, H01G 9/012, H01G 9/26, H01G 11/12, H01G 11/76, H01G 11/78, H01G 9/15

(54) **MULTILAYER POLYMER CAPACITOR (MLPC) WITH MULTIPLE ELECTROPLATED TERMINALS**
MEHRSCHICHTIGER POLYMERKONDENSATOR (MLPC) MIT MEHREREN GALVANISIERTEN ANSCHLÜSSEN
CONDENSATEUR POLYMÈRE MULTICOUCHE (MLPC) À BORNES ÉLECTROPLAQUÉES MULTIPLES

(30) Priority: 12.10.2023 CN 202311317385
(43) Date of publication of application: 16.04.2025
(73) Proprietor: Capxon Electronic Technology Co., Ltd, Shenzhen, Guangdong 518106 (CN)
(72) Inventor: YANG, CHENG-YI, Shenzhen, 518106 (CN); LIN, I-CHU, Shenzhen, 518106 (CN); LIN, YUAN-YU, Shenzhen, 518106 (CN); LIN, CHIN-TSUN, Shenzhen, 518106 (CN); CHEN, Qirui, Shenzhen, 518106 (CN); WU, HSIN-WEN, Shenzhen, 518106 (CN)
(74) Representative: Vitina, Maruta

(56) References cited:
- US-A1- 2015 194 267
- US-A1- 2017 316 885
- US-A1- 2022 336 152

## Description

### TECHNICAL FIELD

This application relates to capacitors, more particularly to a multilayer polymer capacitor (MLPC) with multiple electroplated terminals.

### BACKGROUND

Multilayer polymer capacitors (MLPCs) have been extensively used in consumer electronics such as laptops, cell phones, and networking devices. In order to be compatible with the increasingly-thinned electronic parts, the capacitors also need to be miniaturized. The traditional MLPCs are packaged with epoxy molding compounds (EME), in which positive and negative electrodes of the core are led out by a lead frame, and the lead frame exposed outside the capacitor is bent to form positive and negative terminals. In the traditional MLPC with a height of 1.9 mm or 1.4 mm, the lead frame is bent after welding the electrode plates. Since the thickness of the EME package of MLPCs is enough, the bending operation of the lead pin will not damage the capacitor body. When the capacitor is limited to a total height of 1.0 mm or 1.2 mm, the capacitor body will be damaged when bending the pins since it is too thin, and thus it is not possible to manufacture miniaturized ultra-thin capacitors due to the limitations of process and size. It is a great challenge to manufacture multilayer capacitors with a size of 0.8 mm or less. The bending of the lead frame will take up a certain space, which will further increase the capacitor thickness and affect the structure and performance of the capacitors, failing to achieve the mass production of thinned capacitors. In addition, regarding the traditional multilayer capacitors, the connection between the capacitor body and the positive and negative plates is achieved through lead frames, where the connection of the positive plate is achieved by soldering, and the connection of the negative plate is achieved by bonding with silver paste and curing. The thinned capacitor has a limited thickness and a poor parallel effect, and the traditional equivalent series resistance (ESR) cannot meet the industrial needs. Therefore, how to improve the parallel effect and capacity in a smaller volume, and reduce the equivalent series resistance of the capacitor needs to be urgently resolved.

US patent application publication US 2022/336152 A1 discloses a MLPC, including a casing, a core, a first electroplated terminal and a second electroplated terminal. The core is arranged in an inner cavity of the casing. The casing is formed by joining two first packaging plates with two second packaging plates. The first and second electroplated terminals are formed by electroplating. The first electroplated terminal is configured to cover one end of the casing to form an anode electrically led out from the core, and the second electroplated terminal is configured the other end of the casing to form a cathode electrically led out from the core. The first packaging plate includes a substrate, an electrode plate and two metal plates. The first and second electroplated terminals are integrally sealed with the casing.

US 2017/3166885 A1 discloses a solid-electrolytic capacitor in which a flat insulating substrate bears a capacitor element and separate lead-out structures for the positive and negative electrodes. The lead-out structures are formed by metal layers and conductive vias that run from the upper surface of the substrate to the lower surface, where electro-plated terminals are created; the connection to the element is achieved through a pillow-type member and solder-filled recesses, providing a conductive path between the electrode and the terminal.

### SUMMARY

In view of the deficiencies in the prior art, this application provides a multilayer polymer capacitor (MLPC) with multiple electroplated terminals, where positive and negative electrode terminals are electroplated to be used as lead-out electrodes to realize the product thinning, and the parallel shunt of the negative electrode improves the parallel effect of the capacitor and reduces the equivalent series resistance, thereby solving the limited bending of the lead pin and the poor parallel effect of the capacitor after thinned.

Technical solutions of this application are described as follows.

This application provides, according to Claim 1, a multilayer polymer capacitor (MLPC) with multiple electroplated terminals, comprising:
a casing;
a multilayer core;
an electroplated positive terminal;
a first electroplated negative terminal; and
a second electroplated negative terminal;
wherein the casing comprises a casing body and a cover plate; the casing body is provided with an accommodating cavity; a through hole is provided on a bottom of the
accommodating cavity; the multilayer core is provided in the accommodating cavity; a first end of the accommodating cavity is provided with an anode lead-out part, and a second end of the accommodating cavity is provided with a cathode lead-out part; and the anode lead-out part and the cathode lead-out part are configured to penetrate the casing body;
the electroplated positive terminal is provided at an outer surface of a first end of the casing, and the first electroplated negative terminal is provided at an outer surface of a second end of the casing; the electroplated positive terminal is electrically connected to the anode lead-out part; and the first electroplated negative terminal is electrically connected to the cathode lead-out part;
the second electroplated negative terminal is provided at an outer bottom surface of the casing; and the second electroplated negative terminal is electrically connected to the multilayer core through the through hole; and
the electroplated positive terminal, the first electroplated negative terminal and the second electroplated negative terminal are spaced apart from each other;
characterised in that a first end of the multilayer core is configured as a cathode area, and a second end of the multilayer core is configured as an anode area; a first electrically conductive body is filled between a surface of the cathode area and an inner wall of the accommodating cavity; a fixing adhesive is filled between the inner wall of the accommodating cavity and side surfaces of the first electrically conductive body and between the inner wall of the accommodating cavity and a top surface of the first electrically conductive body; and the second electroplated negative terminal is connected to the first electrically conductive body; and
the second electroplated negative terminal is configured to extend along an inner wall of the through hole to the first electrically conductive body. Embodiments of the invention are set forth with the appended dependent claims. In an embodiment, a first end of the anode lead-out part is connected to the anode area, and a second end of the anode lead-out part is configured to pass through the casing to be connected to the electroplated positive terminal; and
a first end of the cathode lead-out part is connected to the cathode area, and a second end of the cathode lead-out part is configured to pass through the casing to be connected to the first
electroplated negative terminal.

In an embodiment, the second electroplated negative terminal comprises a flat portion, a bent portion, and a recessed portion; and
the flat portion is attached to an outer bottom surface of the casing body; the bent portion is attached to two outer side surfaces of the casing body; and the recessed portion is attached to an inner wall of the first electrically conductive body and an inner wall of the through hole.

In an embodiment, the through hole is provided in a middle of the casing body; and the second electroplated negative terminal further comprises a protruding portion extending along a side of the flat portion towards the first electroplated negative terminal; and a width of the protruding portion is greater than that of the flat portion.

In an embodiment, the recessed portion is connected to the flat portion; the recessed portion is configured to extend along the inner wall of the through hole to the first electrically conductive body; and an outer side of the recessed portion is electrically connected to the first electrically conductive body.

In an embodiment, a filler is embedded at an inner side of the recessed portion.

In an embodiment, a second electrically conductive body is provided in the through hole. In an embodiment, the through hole is round, oval or polygonal.

The present application has the following beneficial technical effects.

Regarding the multilayer polymer capacitor (MLPC) provided herein, positive and negative electrode terminals are formed on the casing surface by electroplating as lead-out electrodes to arrive at a thinned structure. The first and second electroplated negative terminals are combined to improve the parallel effect of the capacitor and reduce the equivalent series resistance, thereby eliminating the limitation when bending the electrode terminal and solving the poor parallel effect after thinning the capacitor.

### BRIEF DESCRIPTION OF THE DRAWINGS

Fig. 1 is a first perspective view of a multilayer polymer capacitor (MLPC) according to an embodiment of the present disclosure;
Fig. 2 is a second perspective view of the MLPC according to an embodiment of the present disclosure;
Fig. 3 is a partial perspective view of the MLPC according to an embodiment of the present disclosure;
Fig. 4 schematically shows a structure of a casing body according to one embodiment of the present disclosure;
Fig. 5 is a sectional view of the MLPC according to an embodiment of the present disclosure in an X-axis direction;
Fig. 6 is a sectional view of the MLPC according to an embodiment of the present disclosure; in a Y-axis direction
Fig. 7 is an enlarged view of portion "A" of Fig. 6 according to an embodiment of the present disclosure; and
Fig. 8 is an enlarged view of portion "A" of Fig. 6 according to another embodiment of the present disclosure.

In the drawings:
1, casing; 2, electroplated positive terminal; 3, first electroplated negative terminal; 4, second electroplated negative terminal; 5, multilayer core; 6, anode lead-out part; 7, cathode lead-out part; 8, first electrically conductive body; 81, second electrically conductive body; 9, fixing adhesive; 10, filler; 101, casing body; 102, cover plate; 401, flat portion; 402, bent portion; 403, recessed portion; 404, protruding portion; 501, anode area; 502, cathode area; 503, insulating adhesive; 1011, through hole; and 1012, accommodating cavity.

### DETAILED DESCRIPTION OF EMBODIMENTS

The technical solutions of the disclosure will be described in detail below in combination with the drawings in the embodiments to make the technical solutions, objects and advantages of the disclosure clearer. Obviously, described below are merely some embodiments of the disclosure, which are not intended to limit the disclosure. Accordingly, the following detailed description is merely illustrative, and is not intended to limit the scope of the disclosure.

As used herein, it should be noted that the orientation or positional relationship indicated by the terms "side, "upper", "lower", "top", "bottom", "inside", "outside" is based on the orientation or positional relationship shown in the accompanying drawings, which is only for the convenience of describing the technical solutions and simplifying the description, rather than indicating or implying that the indicated device or element must have a specific orientation, or be constructed or operated in a specific orientation. Therefore, these terms should not be understood as a limitation of the present disclosure. As used herein, unless otherwise indicated, the phrase "a plurality of" means two or more. In addition, the term "comprising" and any variations thereof mean "at least comprising".

In addition, the terms "first" and "second" are merely descriptive, and cannot be understood as indicating or implying relative importance.

As used herein, unless otherwise expressly specified and defined, the terms, such as "form", "link", and "connect" should be understood in a broad sense, for example, it may be fixed connection, detachable connection, or integral connection; it may be direct connection or indirect connection through an intermediate medium; and it may be an internal communication between two members. For those skilled in the art, the specific meanings of the above terms can be understood according to specific situations.

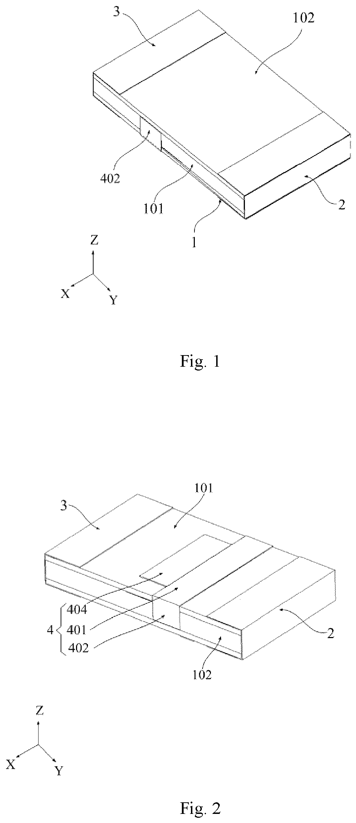

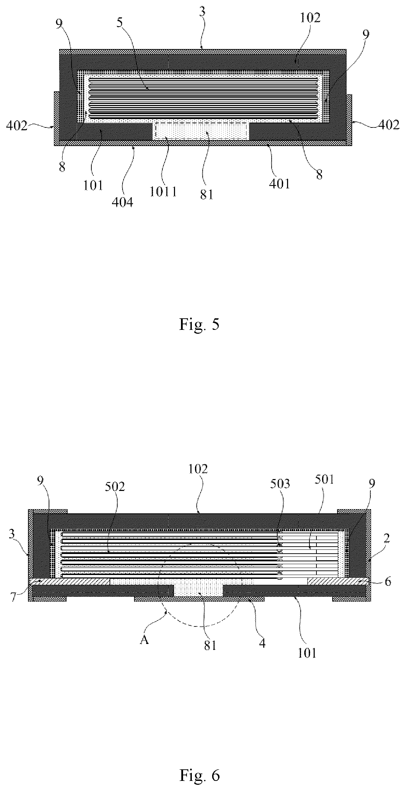

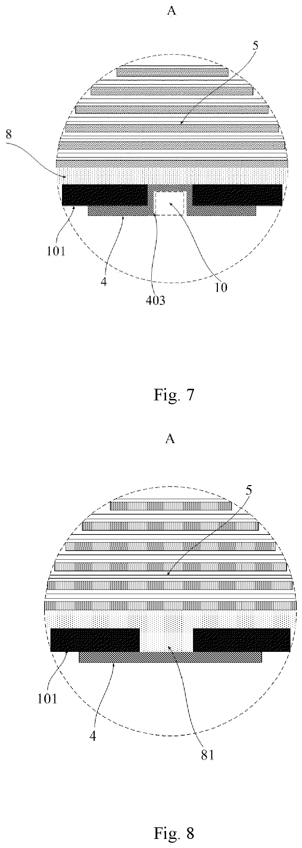

As shown in Figs. 1-8, a multilayer polymer capacitor (MLPC) includes a casing 1, a multilayer core 5, an electroplated positive terminal 2, a first electroplated negative terminal 3, and a second electroplated negative terminal 4. The casing 1 includes a casing body 101 and a cover plate 102. The casing body 101 is provided with an accommodating cavity 1012, whose bottom is provided with a through hole 1011. The multilayer core 5 is encapsulated in the accommodating cavity 1012. An anode lead-out part 6 and a cathode lead-out part 7 are respectively provided at two ends of the accommodating cavity 1012 for leading electrodes out, and the anode lead-out part 6 and the cathode lead-out part 7 are configured to pass through the casing 1. The electroplated positive terminal 2 and the first electroplated negative terminal 3 are formed by electroplating on outer surfaces of two ends of the casing 1, respectively. The electroplated positive terminal 2 is electrically connected to the anode lead-out part 6. The first electroplated negative terminal 3 is electrically connected to the cathode lead-out part 7. The second electroplated negative terminal 4 is provided at an outer bottom surface of the casing 1. The second electroplated negative terminal 4 is electrically connected to the multilayer core 5 through the through hole 1011. The electroplated positive terminal 2, the first electroplated negative terminal 3 and the second electroplated negative terminal 4 are spaced apart from each other.

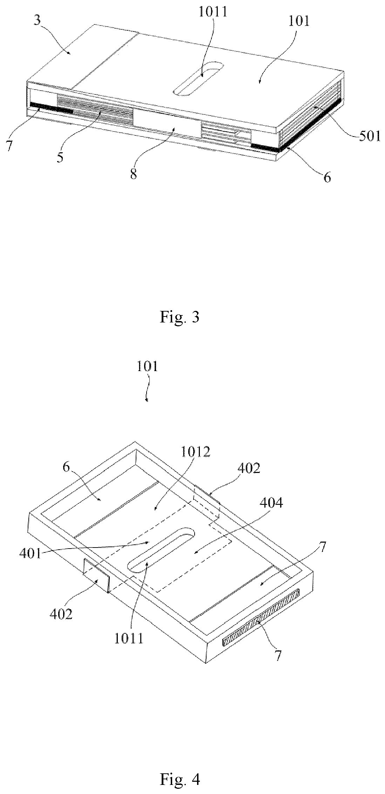

In an embodiment, the multilayer core 5 is formed by stacking a plurality of electrode plates. Each of the plurality of electrode plates is composed of an anode terminal, a cathode terminal and an insulating adhesive 503, where the anode terminal and the cathode terminal are separated from each other by the insulating adhesive 503. After the plurality of electrode plates are stacked, anode terminals of the electrode plates are connected in parallel to form an anode area 501, and cathode terminals of the electrode plates are connected in parallel to form a cathode area 502. The stacked electrode plate structure is fixed to form the multilayer core 5. One end of the multilayer core 5 is configured as the cathode area 502, and the other end of the multilayer core 5 is configured as the anode area 501. A first electrically conductive body 8 is filled between a surface of the cathode area 502 and an inner wall of the accommodating cavity 1012. A fixing adhesive 9 is filled between the inner wall of the accommodating cavity 1012 and side surfaces of the first electrically conductive body 8 and between the inner wall of the accommodating cavity 1012 and a top surface of the first electrically conductive body 8. The second electroplated negative terminal 4 is connected to the first electrically conductive body 8. An end of the anode lead-out part 6 is connected to the anode area 501, and the other end of the anode lead-out part 6 passes through the casing 1 to be connected with the electroplated positive terminal 2. An end of the cathode lead-out part 7 is connected to the cathode area 502, and the other end of the cathode lead-out part 7 passes through the casing 1 to be connected with the first electroplated negative terminal 3. As shown in Figs. 3 and 4, the casing 1 includes the casing body 101 and the cover plate 102. The casing body 101 is provided with the accommodating cavity 1012. In this embodiment, the accommodating cavity 1012 is rectangular. Specifically, the accommodating cavity 1012 has a rectangular groove whose shape and size matches with the multilayer core 5. During the assembly of the capacitor, a number of single cathode plates are first coated with silver paste, the single cathode plates are stacked, and the anodes are welded to obtain the multilayer core 5. The outer surface of the cathode area 502 is coated with the first electrically conductive body 8. The first electrically conductive body 8 is silver paste or conductive adhesive. In this embodiment, the first electrically conductive body 8 is specifically a silver paste. The multilayer core 5 is hermetically sealed in the accommodating cavity 1012. The first electrically conductive body 8 is filled in a gap between the surface of the cathode area 502 and the inner wall of the accommodating cavity 1012. A fixing adhesive 9 is filled outside the first electrically conductive body 8. When assembling the capacitor, the multilayer core 5 coated with silver paste is installed in the accommodating cavity 1012; and the fixing adhesive 9 is filled in the gap between the outer surface of the multilayer core 5 and the inner wall of the accommodating cavity 1012, so as to fix the multilayer core 5 in the accommodating cavity 1012. Further, the cover plate 102 seals the opening at the upper end of the accommodating cavity 1012, so that the casing body 101 and the cover plate 102 are combined to form a whole, and the accommodating cavity 1012 is maintained in a hermetically sealed state. The inner wall of the casing 1 is filled with the fixing adhesive 9, which prevents external water vapor from entering the multilayer core 5 to destroy its conductive polymer layer, improving the stability of the capacitor. In other embodiments, the internal gap thereof may be filled with an inert gas to improve its stability. In some embodiments, the casing 1 may also be encapsulated with the multilayer core 5 using integral injection molding to obtain a multilayer capacitor.

In this embodiment, the anode lead-out part 6 and the cathode lead-out part 7 are made of copper foil, aluminum foil, or silver foil, preferably copper foil. An electrical connection is formed between the inner side of the anode lead-out part 6 and the anode area 501 by coating silver paste or by soldering, thereby configuring as an anode lead-out. An electrical connection is formed between the inner side of the cathode lead-out part 7 and the outer surface of the multilayer core 5 by bonding silver paste, as thereby configuring a cathode lead-out.

In this embodiment, the electroplated positive terminal 2 and the first electroplated negative terminal 3 having a certain shape are formed by plating the exposed end of the anode lead-out part 6 and the exposed end of the cathode lead-out part 7 on the surface of the casing 1, respectively. The electroplated positive terminal 2 and the first electroplated negative terminal 3 are connected to the anode lead-out part 6 and the cathode lead-out part 7, respectively, to form the lead-out electrodes of the positive and negative electrodes. The electroplated positive terminal 2 and the first electroplated negative terminal 3 are covered on the outer surfaces of both ends of the casing 1 to form a whole. The thickness of the positive and electroplated negative terminals can be set according to the actual needs of any size, not limited by the thickness of the terminals. The thickness of the capacitor can be made thinner, breaking through the constraints of bending size limitations of positive and negative terminals of traditional multilayer capacitor. Any thickness of the electrode terminals can be made on any size of the multilayer capacitor. In the case of the total height of the capacitor remains unchanged, this disclosure reduces the thickness of the electrode terminals, increases the electrodes of the capacitor to improve the electrostatic capacity, and achieves lighter- thinner and high-capacity design.

In an embodiment, the through hole 1011 is round, oval or polygonal. In this embodiment, the through hole is oval, and the number of through holes 1011 is not limited.

In an embodiment, a part of the second electrically conductive body 81 seals the opening of the through hole 1011, and the through hole 1011 is filled with the second electrically conductive body 81. The conductive body 8 passes through the through hole 1011 to externally form the lead-out point, which increases the current conductive area, reduces the impedance, has a strong electron mobility, improves the current parallel export of the cathode, and improves the large ripple current. The lead-out electrode is formed in the opening of the through hole 1011 by the plating, that is, the second electroplated negative terminal 4. The negative electrode export of the entire capacitor is parallel common output of the first electroplated negative terminal 3 and the second electroplated negative terminal 4. The second electroplated negative terminal 4 is formed by electroplating. The second electroplated negative terminal 4 includes a flat portion 401 and a bent portion 402. The flat portion 401 is attached to the bottom outer surface of the casing body 101 to connect directly with the conductive body 8 filled in the through hole 1011. The bent portion 402 is attached to two outer side surfaces of the casing body 101. In an embodiment, the through hole 1011 is not filled with the first electrically conductive body 8. In this embodiment, the second electroplated negative terminal 4 further includes a recessed portion 403. The recessed portion 403 is connected to the flat portion 401, and the recessed portion 403 extends along the inner wall of the through hole 1011 to the first electrically conductive body 8. In some embodiments, the outer side of the recessed portion 403 is electrically connected to the first electrically conductive body 8, and the inner side of the recessed portion 403 is electrically connected to the filler 10. The filler 10 is embedded in the inner side of the recessed portion 403. The filler 10 is made of materials with high heat dissipation, which improves heat exportation and heat dissipation. Furthermore, the filler 10 is electrically conductive materials with a strong electrical conductivity, such as silver, gold, and copper, which is filled with a good conductor and reduces the resistivity, thereby improving the problem of the parallel current of the negative electrode to generate heat.

Specifically, the second electroplated negative terminal 4 is formed by electroplating, and the shape of the second electroplated negative terminal 4 is not limited. The flat portion 401 of the second electroplated negative terminal 4 is attached to the outer bottom surface of the casing body 101. The flat portion 401 is connected to the first electrically conductive body 8 in the accommodating cavity 1012 and the second electrically conductive body 81 in the through hole 1011 via the recessed portion 403 to form the second negative electrode export. The negative electrode export of the entire capacitor is jointly output by the first electroplated negative terminal 3 and the second electroplated negative terminal 4, thereby increasing the parallel connection efficiency of the capacitor and reducing the equivalent series resistance of the multilayer capacitor. The conductive terminals are formed by the electroplated positive terminal 2, the first electroplated negative terminal 3, the second electroplated negative terminal 4 by plating, which also breaks through the traditional size limitations, and the height of the capacitor is reduced to 0.3-1.0 mm. The electrode terminals are formed by plating to realize the thin design of the capacitor, instead of the electrode terminals led out by the traditional bending method. The electroplating terminals combined with the parallel connection reduces the equivalent series resistance.

The second electroplated negative terminal 4 extends outwardly to the bottom surface of the casing 1. The electroplated positive terminal 2, the first electroplated negative terminal 3, and the second electroplated negative terminal 4 are attached to the surface of the casing 1 and combined with the casing 1 to form a whole.

In this embodiment, the through hole 1011 is disposed in the middle of the bottom of the casing body 101. The second electroplated negative terminal 4 further includes a protruding portion 404 extending along one side of the flat portion 401 toward the first electroplated negative terminal 3. The width of the protruding portion 404 is greater than that of the flat portion 401. The protruding portion 404 reduces inductance, improves resistance to large ripple current effect, increases heat dissipation area, improves heat dissipation effect, increases welding area, and improves solidity.

When the capacitor is mounted on a printed circuit board (PCB), the second electroplated negative terminal 4 is welded to the PCB in addition to the electroplated positive terminal 2 and the first electroplated negative terminal 3. On the one hand, the parallel export of the second electroplated negative terminal 4 reduces the equivalent series resistance of the multilayer capacitor, and on the other hand, the second electroplated negative terminal 4 is welded to the PCB, which improves the stability and the heat dissipation performance of the capacitor. The electroplated positive terminal 2, the first electroplated negative terminal 3, and the second electroplated negative terminal 4 are terminals formed by plating. The thickness of the positive and electroplated negative terminals formed by plating can be set according to the actual size needs, not limited to the thickness of the multilayer capacitor. The multilayer capacitor can be thinner, thereby breaking through the constraints of bending size limitations of positive and negative terminals of traditional multilayer capacitor. Any thickness of the electrode terminals can be made on any size of the multilayer capacitor. In the case of the total height of the capacitor remains unchanged, this disclosure reduces the thickness of the electrode terminals, increases the electrodes of the capacitor to improve the electrostatic capacity, and achieves lighter- thinner and high-capacity design.

It is clear that described below are merely some embodiments of the disclosure, which are not intended to limit the disclosure.

## Claims

1. A multilayer polymer capacitor (MLPC), comprising:
a casing (1);
a multilayer core (5);
an electroplated positive terminal (2);
a first electroplated negative terminal (3); and
a second electroplated negative terminal (4);
wherein the casing (1) comprises a casing body (101) and a cover plate (102); the casing body (101) is provided with an accommodating cavity (1012); a through hole (1011) is provided on a bottom of the accommodating cavity (1012); the multilayer core (5) is provided in the accommodating cavity (1012); a first end of the accommodating cavity (1012) is provided with an anode lead-out part (6), and a second end of the accommodating cavity (1012) is provided with a cathode lead-out part (7); and the anode lead-out part (6) and the cathode lead-out part (7) are configured to penetrate the casing body (101);
the electroplated positive terminal (2) is provided at an outer surface of a first end of the casing (1), and the first electroplated negative terminal (3) is provided at an outer surface of a second end of the casing (1); the electroplated positive terminal (2) is electrically connected to the anode lead-out part (6); and the first electroplated negative terminal (3) is electrically connected to the cathode lead-out part (7);
the second electroplated negative terminal (4) is provided at an outer bottom surface of the casing (1); and the second electroplated negative terminal (4) is electrically connected to the multilayer core through the through hole (1011); and
the electroplated positive terminal (2), the first electroplated negative terminal (3) and the second electroplated negative terminal (4) are spaced apart from each other;
**characterized in that**:
a first end of the multilayer core is configured as a cathode area (502), and a second end of the multilayer core (5) is configured as an anode area (501); a first electrically conductive body (8) is filled between a surface of the cathode area (502) and an inner wall of the accommodating cavity (1012); a fixing adhesive (9) is filled between the inner wall of the accommodating cavity (1012) and side surfaces of the first electrically conductive body (8) and between the inner wall of the accommodating cavity (1012) and a top surface of the first electrically conductive body (8); and the second electroplated negative terminal (4) is connected to the first electrically conductive body (8); and
the second electroplated negative terminal (4) is configured to extend along an inner wall of the through hole (1011) to the first electrically conductive body (8).

2. The MLPC of claim 1, **characterized in that** a first end of the anode lead-out part (6) is connected to the anode area (501), and a second end of the anode lead-out part (6) is configured to pass through the casing (1) to be connected with the electroplated positive terminal (2); and
a first end of the cathode lead-out part (7) is connected to the cathode area (502), and a second end of the cathode lead-out part (7) is configured to pass through the casing (1) to be connected with the first electroplated negative terminal (3).

3. The MLPC of claim 1, **characterized in that** the second electroplated negative terminal (4) comprises a flat portion (401), a bent portion (402), and a recessed portion (403); and
the flat portion (401) is attached to an outer bottom surface of the casing body (101); the bent portion (402) is attached to two outer side surfaces of the casing body (101); and the recessed portion (403) is attached to an inner wall of the first electrically conductive body (8) and an inner wall of the through hole (1011).

4. The MLPC of claim 3, **characterized in that** the through hole (1011) is provided in a middle of the casing body (101); and
the second electroplated negative terminal (4) further comprises a protruding portion (404) extending along a side of the flat portion (401) towards the first electroplated negative terminal (3); and a width of the protruding portion (404) is greater than that of the flat portion (401).

5. The MLPC of claim 3, **characterized in that** the recessed portion (403) is connected to the flat portion (401); the recessed portion (403) is configured to extend along the inner wall of the through hole (1011) to the first electrically conductive body (8); and an outer side of the recessed portion (403) is electrically connected to the first electrically conductive body (8).

6. The MLPC of claim 5, **characterized in that** a filler (10) is embedded at an inner side of the recessed portion (403).

7. The MLPC of claim 1, **characterized in that** a second electrically conductive body (81) is provided in the through hole (1011).

8. The MLPC of claim 1, **characterized in that** the through hole (1011) is round, oval or polygonal.

## Patentansprüche

1. Mehrschicht-Polymerkondensator (MLPC), umfassend:
ein Gehäuse (1);
einen Mehrschichtkern (5);
einen galvanisch abgeschiedenen positiven Anschluss (2);
einen ersten galvanisch abgeschiedenen negativen Anschluss (3); und
einen zweiten galvanisch abgeschiedenen negativen Anschluss (4),
wobei das Gehäuse (1) einen Gehäusekörper (101) und eine Deckplatte (102) umfasst; der Gehäusekörper (101) einen Aufnahmeraum (1012) aufweist; an einem Boden des Aufnahmeraums (1012) ein Durchgangsloch (1011) ausgebildet ist; der Mehrschichtkern (5) in dem Aufnahmeraum (1012) angeordnet ist; an einem ersten Ende des Aufnahmeraums (1012) ein Anodenableitungselement (6) angeordnet ist und an einem zweiten Ende des Aufnahmeraums (1012) ein Kathodenableitungselement (7) angeordnet ist; und das Anodenableitungselement (6) und das Kathodenableitungselement (7) dazu ausgebildet sind, durch den Gehäusekörper (101) hindurchzugehen;
der galvanisch abgeschiedene positive Anschluss (2) an einer Außenfläche eines ersten Endes des Gehäuses (1) angeordnet ist und der erste galvanisch abgeschiedene negative Anschluss (3) an einer Außenfläche eines zweiten Endes des Gehäuses (1) angeordnet ist; der galvanisch abgeschiedene positive Anschluss (2) mit dem Anodenableitungselement (6) elektrisch verbunden ist; und der erste galvanisch abgeschiedene negative Anschluss (3) mit dem Kathodenableitungselement (7) elektrisch verbunden ist;
der zweite galvanisch abgeschiedene negative Anschluss (4) an einer äußeren Bodenfläche des Gehäuses (1) angeordnet ist; und der zweite galvanisch abgeschiedene negative Anschluss (4) durch das Durchgangsloch (1011) mit dem Mehrschichtkern elektrisch verbunden ist; und
der galvanisch abgeschiedene positive Anschluss (2), der erste galvanisch abgeschiedene negative Anschluss (3) und der zweite galvanisch abgeschiedene negative Anschluss (4) voneinander beabstandet sind,
**dadurch gekennzeichnet, dass**
ein erstes Ende des Mehrschichtkerns als ein Kathodenbereich (502) ausgebildet ist und ein zweites Ende des Mehrschichtkerns (5) als ein Anodenbereich (501) ausgebildet ist; ein erster elektrisch leitfähiger Körper (8) zwischen einer Oberfläche des Kathodenbereichs (502) und einer Innenwand des Aufnahmeraums (1012) eingefüllt ist; ein Fixierklebstoff (9) zwischen der Innenwand des Aufnahmeraums (1012) und Seitenflächen des ersten elektrisch leitfähigen Körpers (8) und zwischen der Innenwand des Aufnahmeraums (1012) und einer oberen Fläche des ersten elektrisch leitfähigen Körpers (8) eingefüllt ist; und der zweite galvanisch abgeschiedene negative Anschluss (4) mit dem ersten elektrisch leitfähigen Körper (8) verbunden ist; und
der zweite galvanisch abgeschiedene negative Anschluss (4) dazu ausgebildet ist, sich entlang einer Innenwand des Durchgangslochs (1011) bis zu dem ersten elektrisch leitfähigen Körper (8) zu erstrecken.

2. MLPC nach Anspruch 1, **dadurch gekennzeichnet, dass** ein erstes Ende des Anodenableitungselements (6) mit dem Anodenbereich (501) verbunden ist und ein zweites Ende des Anodenableitungselements (6) dazu ausgebildet ist, durch das Gehäuse (1) hindurchzugehen, um mit dem galvanisch abgeschiedenen positiven Anschluss (2) verbunden zu sein; und
ein erstes Ende des Kathodenableitungselements (7) mit dem Kathodenbereich (502) verbunden ist und ein zweites Ende des Kathodenableitungselements (7) dazu ausgebildet ist, durch das Gehäuse (1) hindurchzugehen, um mit dem ersten galvanisch abgeschiedenen negativen Anschluss (3) verbunden zu sein.

3. MLPC nach Anspruch 1, **dadurch gekennzeichnet, dass** der zweite galvanisch abgeschiedene negative Anschluss (4) einen flachen Abschnitt (401), einen gebogenen Abschnitt (402) und einen vertieften Abschnitt (403) umfasst; und
der flache Abschnitt (401) an einer äußeren Bodenfläche des Gehäusekörpers (101) angebracht ist; der gebogene Abschnitt (402) an zwei äußeren Seitenflächen des Gehäusekörpers (101) angebracht ist; und der vertiefte Abschnitt (403) an einer Innenwand des ersten elektrisch leitfähigen Körpers (8) und an einer Innenwand des Durchgangslochs (1011) angebracht ist.

4. MLPC nach Anspruch 3, **dadurch gekennzeichnet, dass** das Durchgangsloch (1011) in der Mitte des Gehäusekörpers (101) angeordnet ist; und
der zweite galvanisch abgeschiedene negative Anschluss (4) ferner einen vorspringenden Abschnitt (404) umfasst, der sich entlang einer Seite des flachen Abschnitts (401) zum ersten galvanisch abgeschiedenen negativen Anschluss (3) hin erstreckt; und eine Breite des vorspringenden Abschnitts (404) größer als die Breite des flachen Abschnitts (401) ist.

5. MLPC nach Anspruch 3, **dadurch gekennzeichnet, dass** der vertiefte Abschnitt (403) mit dem flachen Abschnitt (401) verbunden ist; der vertiefte Abschnitt (403) dazu ausgebildet ist, sich entlang der Innenwand des Durchgangslochs (1011) bis zu dem ersten elektrisch leitfähigen Körper (8) zu erstrecken; und eine Außenseite des vertieften Abschnitts (403) mit dem ersten elektrisch leitfähigen Körper (8) elektrisch verbunden ist.

6. MLPC nach Anspruch 5, **dadurch gekennzeichnet, dass** an einer Innenseite des vertieften Abschnitts (403) ein Füllmaterial (10) eingebettet ist.

7. MLPC nach Anspruch 1, **dadurch gekennzeichnet, dass** in dem Durchgangsloch (1011) ein zweiter elektrisch leitfähiger Körper (81) angeordnet ist.

8. MLPC nach Anspruch 1, **dadurch gekennzeichnet, dass** das Durchgangsloch (1011) rund, oval oder polygonal ist.

## Revendications

1. Condensateur multicouche à base de polymère (MLPC), comprenant :
un boîtier (1) ;
un noyau multicouche (5) ;
une borne positive électroplaquée (2) ;
une première borne négative électroplaquée (3) ; et
une deuxième borne négative électroplaquée (4) ;
dans lequel le boîtier (1) comprend un corps de boîtier (101) et une plaque de couvercle (102) ; le corps de boîtier (101) est pourvu d'une cavité de logement (1012) ; un trou traversant (1011) est prévu sur un fond de la cavité de logement (1012) ; le noyau multicouche (5) est disposé dans la cavité de logement (1012) ; une première extrémité de la cavité de logement (1012) est pourvue d'une partie de sortie d'anode (6), et une deuxième extrémité de la cavité de logement (1012) est pourvue d'une partie de sortie de cathode (7) ; et la partie de sortie d'anode (6) et la partie de sortie de cathode (7) sont configurées pour pénétrer dans le corps de boîtier (101) ;
la borne positive électroplaquée (2) est prévue au niveau d'une surface extérieure d'une première extrémité du boîtier (1), et la première borne négative électroplaquée (3) est prévue au niveau d'une surface extérieure d'une deuxième extrémité du boîtier (1) ; la borne positive électroplaquée (2) est connectée électriquement à la partie de sortie d'anode (6) ; et la première borne négative électroplaquée (3) est connectée électriquement à la partie de sortie de cathode (7) ;
la deuxième borne négative électroplaquée (4) est prévue au niveau d'une surface inférieure extérieure du boîtier (1) ; et la deuxième borne négative électroplaquée (4) est connectée électriquement au noyau multicouche à travers le trou traversant (1011) ; et
la borne positive électroplaquée (2), la première borne négative électroplaquée (3) et la deuxième borne négative électroplaquée (4) sont espacées les unes des autres ;
**caractérisé en ce que** :
une première extrémité du noyau multicouche est configurée comme une zone de cathode (502), et une deuxième extrémité du noyau multicouche (5) est configurée comme une zone d'anode (501) ; un premier corps électriquement conducteur (8) remplit l'espace entre une surface de la zone de cathode (502) et une paroi intérieure de la cavité de logement (1012) ; un adhésif de fixation (9) remplit l'espace entre la paroi intérieure de la cavité de logement (1012) et des surfaces latérales du premier corps électriquement conducteur (8) et entre la paroi intérieure de la cavité de logement (1012) et une surface supérieure du premier corps électriquement conducteur (8) ; et la deuxième borne négative électroplaquée (4) est connectée au premier corps électriquement conducteur (8) ; et
la deuxième borne négative électroplaquée (4) est configurée pour s'étendre le long d'une paroi intérieure du trou traversant (1011) jusqu'au premier corps électriquement conducteur (8).

2. MLPC selon la revendication 1, **caractérisé en ce qu'**une première extrémité de la partie de sortie d'anode (6) est connectée à la zone d'anode (501), et une deuxième extrémité de la partie de sortie d'anode (6) est configurée pour traverser le boîtier (1) pour être connectée à la borne positive électroplaquée (2) ; et
une première extrémité de la partie de sortie de cathode (7) est connectée à la zone de cathode (502), et une deuxième extrémité de la partie de sortie de cathode (7) est configurée pour traverser le boîtier (1) pour être connectée à la première borne négative électroplaquée (3).

3. MLPC selon la revendication 1, **caractérisé en ce que** la deuxième borne négative électroplaquée (4) comprend une partie plate (401), une partie courbée (402) et une partie en creux (403) ; et
la partie plate (401) est fixée à une surface inférieure extérieure du corps de boîtier (101) ; la partie courbée (402) est fixée à deux surfaces latérales extérieures du corps de boîtier (101) ; et la partie en creux (403) est fixée à une paroi intérieure du premier corps électriquement conducteur (8) et à une paroi intérieure du trou traversant (1011).

4. MLPC selon la revendication 3, **caractérisé en ce que** le trou traversant (1011) est prévu au milieu du corps de boîtier (101) ; et
la deuxième borne négative électroplaquée (4) comprend en outre une partie en saillie (404) s'étendant le long d'un côté de la partie plate (401) vers la première borne négative électroplaquée (3) ; et une largeur de la partie en saillie (404) est supérieure à celle de la partie plate (401).

5. MLPC selon la revendication 3, **caractérisé en ce que** la partie en creux (403) est connectée à la partie plate (401) ; la partie en creux (403) est configurée pour s'étendre le long de la paroi intérieure du trou traversant (1011) jusqu'au premier corps électriquement conducteur (8) ; et un côté extérieur de la partie en creux (403) est connecté électriquement au premier corps électriquement conducteur (8).

6. MLPC selon la revendication 5, **caractérisé en ce qu'**un matériau de remplissage (10) est encastré au niveau d'un côté intérieur de la partie en creux (403).

7. MLPC selon la revendication 1, **caractérisé en ce qu'**un deuxième corps électriquement conducteur (81) est prévu dans le trou traversant (1011).

8. MLPC selon la revendication 1, **caractérisé en ce que** le trou traversant (1011) est rond, ovale ou polygonal.
